(19) Europäisches Patentamt European Patent Office Office européen des brevets

(11) **EP 4 763 928 A1**

(12) **EUROPEAN PATENT APPLICATION**
published in accordance with Art. 153(4) EPC

(43) Date of publication:
**24.06.2026 Bulletin 2026/26**

(21) Application number: **24856378.5**

(22) Date of filing: **14.08.2024**

(51) International Patent Classification (IPC):
**C09D 13/00** $^{(2006.01)}$    **B43K 19/02** $^{(2006.01)}$

(52) Cooperative Patent Classification (CPC):
**B43K 19/02; C09D 13/00**

(86) International application number:
**PCT/JP2024/028969**

(87) International publication number:
**WO 2025/041687 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.08.2023 JP 2023133271**

(71) Applicant: **MITSUBISHI PENCIL COMPANY, LIMITED**
**Tokyo 140-8537 (JP)**

(72) Inventor: **MURATA, Tatsuya**
**Fujioka-shi, Gunma 375-8501 (JP)**

(74) Representative: **Vossius & Partner**
**Patentanwälte Rechtsanwälte mbB**
**Siebertstraße 3**
**81675 München (DE)**

(54) **UNFIRED PENCIL LEAD**

(57) Provided is an unfired pencil core that can highly achieve both drawing line performance that is high in visibility and easy to take in even with a tablet, and pencil writing property/drawing line characteristics. An unfired pencil core of the present disclosure is an unfired pencil core containing at least an extender, a pigment, and a water-soluble resin, and is characterized in that a region of an intensity ratio (G/D) of 2.0 or more of a D band (around 1350 cm$^{-1}$) and a G band (around 1580 cm$^{-1}$) in a Raman spectrum of a drawn line is 5 to 20%, and the region of the intensity ratio (G/D) of 0.5 to 1.5 of the drawn line is 20% or more.

EP 4 763 928 A1

## Description

Technical Field

The present specification relates to an unfired pencil core.

Background Art

In the prior art, a fired pencil core is generally produced by kneading graphite and clay to form a core, sintering the clay at a high temperature around 1,000°C to obtain a core body, and then impregnating a pore generated in the core body with oil and the like. Such a fired pencil core is widely used because the graphite is fixed to a paper surface by the impregnated oil, and erasability with an eraser is good (see, for example, Patent Document 1) . However, the fired pencil core requires heating at around 1, 000°C for the purpose of sintering clay of a bonding material, and requires energy.

In an unfired pencil core in the prior art, a wax or a resin is used as a bonding material, and the unfired pencil core is produced by, for example, kneading with various inorganic or organic pigments, molding the resulting mixture into a core shape by an extrusion molding machine and the like, and then performing a drying treatment as necessary (see, for example, Patent Document 2).

In such an unfired pencil core, the bonding material is a wax or a resin, and a pencil core drawn line has high gloss; therefore, visibility is poor, and in particular, when the pencil core drawn line is taken in with a tablet and the like, the color becomes lighter due to the gloss in many cases. On the other hand, although the color pencil has high visibility, the writing property is too high for writing characters, and the drawn line cannot be erased.

On the other hand, as a pencil core in which gloss is suppressed, a fired pencil core (see, for example, Patent Document 3) obtained from 10 parts of earthy graphite, 20 parts of clay, 20 parts of carbon black, 50 parts of a calcium carbonate powder, 3 parts of an adhesive (xanthan gum) , and 120 parts of water is known. On the other hand, there is known a fired pencil core (see, for example, Patent Document 4) having a tip strength/core bending strength of 0.6 or more and 1.5 or less, a writing resistance value of 65 N or less, and an R value (intensity ratio: G/D) by Raman spectroscopy of 0.15 or more and 0.55 or less.

However, the fired pencil core of Patent Document 3 still has an insufficient gloss suppressing effect, low erasability and the like, and room for improvement. In the fired pencil core of Patent Document 4, although an R value (intensity ratio: G/D) by Raman spectroscopy is referred to, the fired pencil core is disclosed. Examples do not support the R value (intensity ratio: G/D), and Patent Document 4 is different from the present disclosure in the problem and technical idea (configuration and effects thereof) of the invention.

Citation List

Patent Documents

Patent Document 1: JP 2007-138031 A
Patent Document 2: JP 2012-52109 A
Patent Document 3: CN 109385147 B
Patent Document 4: JP 2023-95065 A

Summary of Invention

Technical Problem

An object of the present disclosure is to solve the above-described prior problems and the like, and to provide an unfired pencil core that can highly achieve both drawn line performance that is high in visibility and easy to take in even with a tablet, and drawn line characteristics such as high pencil writing property and high drawn line erasing rate. Solution to Problem

As a result of intensive studies on the above-described known problems and the like, the present discloser has found that in an unfired pencil core containing at least an extender, a pigment, and a water-soluble resin, an unfired pencil core that solves the above-described problems can be obtained by setting a region of a peak intensity ratio (G/D) of 2.0 or more of a D band (around 1350 cm$^{-1}$) and a G band (around 1580 cm$^{-1}$) in a Raman spectrum of a drawn line to be obtained and a region of the peak intensity ratio (G/D) of 0.5 to 1.5 of the drawn line to a predetermined range and the like, and has completed the present disclosure.

That is, the unfired pencil core of the present disclosure is an unfired pencil core containing at least an extender, a pigment, and a water-soluble resin, and is characterized in that a region of a peak intensity ratio (G/D) of 2.0 or more of a D band (at around 1350 cm$^{-1}$) and a G band (at around 1580 cm$^{-1}$) in a Raman spectrum of a drawn line to be obtained is 5 to 20%, and a region of an intensity ratio (G/D) of 0.5 to 1.5 of the drawn line is 20% or more.

A material for having an intensity ratio (G/D) of 2.0 or more is preferably scale-like graphite having an average particle diameter of 5 to 20 $\mu$m.

A material for having the intensity ratio (G/D) of 0.5 to 1.5 is preferably at least one selected from carbon black, earthy graphite, and a plant-derived black pigment.

Advantageous Effects of Invention

According to the present disclosure, there is provided an unfired pencil core that can highly achieve both drawn line performance that is high in visibility and easy to take in even with a tablet, and drawn line characteristics such as high pencil writing property and high drawn line erasing rate.

The object and effects of the present disclosure can be recognized and obtained especially using the components and combinations indicated in the claims. Both the general explanation described above and the detailed explanation described below are exemplary and explanatory and do not limit the present disclosure described in Claims.

Brief Description of Drawings

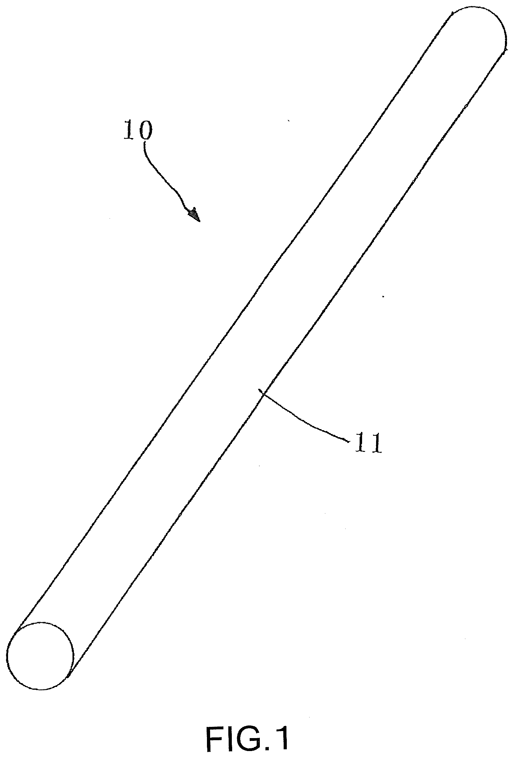

FIG. 1 is a perspective view schematically showing an appearance of an unfired pencil core as an example of an embodiment of the present disclosure.

Description of Embodiments

Embodiments of the present disclosure will be described below in detail. However, it should be noted that the technical scope of the present disclosure is not limited to the embodiments detailed below and includes the invention described in Claims and equivalents thereof. The present disclosure can be implemented based on the contents disclosed in the present specification and technical common knowledge (including design matters and obvious matters) in the art.

An unfired pencil core of the present embodiment is an unfired pencil core containing at least an extender, a pigment, and a water-soluble resin, and is characterized in that in an intensity ratio (G/D) of D-band (at around 1350 cm$^{-1}$) and G-band (at around 1580 cm$^{-1}$) in a Raman spectrum of drawn lines obtained, a region of a peak intensity ratio (G/D) of 2.0 or more is 5 to 20%, and a region of an intensity ratio (G/D) of the drawn line of 0.5 to 1.5 is 20% or more.

As the extender (filler) used in the present embodiment, any extender that has been used in unfired pencil cores in the prior art can be used without particular limitation. For example, a white extender such as boron nitride, kaolin, talc, mica, and calcium carbonate can be used, a color extender can also be used depending on a hue of a solid drawing material, and as a matter of course, a mixture of several of these extenders can also be used. In particular, preferred examples thereof include boron nitride, kaolin, talc, scale-like graphite, sericite, and mica from the viewpoint of the physical properties, shape, effect of the present disclosure, and the like.

A total content of these extenders is not particularly limited as long as the region of the intensity ratio (G/D) of 2.0 or more in the Raman spectrum of the drawn line and the region of the intensity ratio (G/D) of 0.5 to 1.5 are predetermined ratios, and is preferably 30 to 80 mass% and particularly preferably 50 to 70 mass% with respect to a total amount of the unfired pencil core.

Examples of the pigment used in the present embodiment include carbon black, earthy graphite, a plant-derived black pigment, titanium oxide, iron black, Prussian blue, ultramarine, blue No. 1, rouge, yellow iron oxide, chromium oxide, chromium hydroxide, zinc oxide, zirconium oxide, cobalt oxide, fish scale foil, bismuth oxychloride, titanium mica, azo organic pigments such as disazo yellow AAA and pyrazolone orange, cyanine organic pigments such as phthalocyanine blue and phthalocyanine green, high grade organic pigments such as quinacridone red, dyeing pigments such as fanal color, and fluorescent pigments. In addition to the pigment, dyes such as Blue No. 2, Blue No. 404, Red No. 2, Red No. 3, Red No. 102, Red No. 104, Red No. 105, Red No. 106, DPP Red, Yellow No. 4, Yellow No. 5, and Green No. 3 can also be used, and these dyes can be used alone or in combination of two or more thereof.

Examples of the plant-derived black pigment that can be used include a carbonized coloring material obtained by carbonizing a plant such as bamboo or wood at a temperature of 250°C or higher. The plant-derived carbon black pigment is not particularly limited, and for example, charcoal such as black charcoal, white charcoal, sawdust charcoal, bamboo charcoal, and dust charcoal is used. Among these, bamboo charcoal and white charcoal represented by Bincho charcoal are preferable. The bamboo charcoal containing bamboo as a raw material has finer pores than other charcoal. In addition, since bamboo charcoal contains a larger amount of glassy substances than charcoal, wettability with a water-soluble resin serving as a binder is better than that of charcoal, and thus, there is an effect of further improving the effects of the present disclosure.

In particular, preferred examples thereof include carbon black, earthy graphite, bamboo charcoal, bincho charcoal, and coconut shell charcoal from the viewpoint of the physical properties, shape, effects of the present disclosure, and the like.

A total content of these pigments is not particularly limited as long as the region of the intensity ratio (G/D) of 2.0 or more in the Raman spectrum of the drawn line and the region of the intensity ratio (G/D) of 0.5 to 1.5 are predetermined ratios, and is preferably 20 to 50 mass% and particularly preferably 30 to 40 mass% with respect to the total amount of the unfired pencil core.

As the water-soluble resin used in the present embodiment, water-soluble polymers such as sodium carboxymethylcellulose (CMC-Na), carboxycellulose ammonium, polyvinyl alcohol (PVA), methyl cellulose, hydroxypropyl cellulose, xanthan gum, echo gum, etherified starch, polyacrylamide, and polyacrylic acid can be used.

In particular, preferred examples thereof include sodium carboxymethylcellulose (CMC-Na), polyvinyl alcohol (PVA), xanthan gum, polyacrylic acid, and polyacrylamide from the viewpoint of the physical properties, shape, effects of the present disclosure, and the like.

A total content of these water-soluble resins is not particularly limited as long as the region of the intensity ratio (G/D) of 2.0 or more in the Raman spectrum of the drawn line and the region of the intensity ratio (G/D) of 0.5 to 1.5 are predetermined ratios, and is preferably 5 to 30 mass% and particularly preferably 10 to 20 mass% with respect to the total amount of the unfired pencil core.

The unfired pencil core of the present embodiment contains at least the extender, the pigment, and the water-soluble resin, and can contain, in addition to the above components, a lubricant such as a metal soap, PTFE particles, a hydrocarbon-based wax, a wax ester, and the like in an appropriate amount for the purpose of adjusting a wear amount of the core body.

Examples of the metal soap that can be used include zinc stearate, barium stearate, aluminum stearate, magnesium stearate, zinc lauric acid, and zinc 12 hydroxystearic acid.

As the unfired pencil core of the present embodiment, for example, an intended unfired pencil core having predetermined physical properties can be manufactured by the following manufacturing method. That is, a predetermined water-soluble resin is added to a mixture of a predetermined powderous pigment and an extender, and the mixture is kneaded to prepare a mixture. At this time, a lower alcohol [carbon number (C5) or less] such as ethanol and a solvent such as water can be added as necessary. The mixture obtained by the preparation is extruded into a pencil core having a predetermined shape and dimension by a plunger type or screw type extruder. When a solvent is used, the solvent is then removed by drying (about 40°C, 24 hours). By the molding, an unfired pencil core 10 having a substantially cylindrical core body 11 as shown in FIG. 1 is obtained.

The core body after molding is a porous body having a pore derived from a microscopic structure of the pigment and the extender. The pore may be left as it is, or may be heated at 60 to 200°C for 12 hours and then impregnated with oils and/or fats as necessary. As the solvent, a lower alcohol such as ethanol, water, or the like can be used.

As the oils and/or fats that can be used, examples which can be suitably used include oily substances that are liquid at normal temperature, such as liquid paraffin, spindle oil, silicone oil, $\alpha$-olefin oligomers, and vegetable oils and/or fats such as squalane, palm oil, and olive oil, and animal oils and/or fats such as lard. Among these, silicone oils are particularly good, and examples thereof include dimethyl silicone oil, methyl phenyl silicone oil, methyl hydrogen silicone oil, cyclic dimethyl silicone oil, polyether-modified silicone oil, methylstyryl-modified silicone oil, and alkyl-modified silicone oil.

As described above, the unfired pencil core of the present embodiment can be manufactured by the above-described manufacturing method and the like using at least the extender, the pigment, and the water-soluble resin, the region of the intensity ratio (G/D) of 2.0 or more of the D band (1350 cm$^{-1}$) and the G band (1582 cm$^{-1}$) in the Raman spectrum of the drawn line is 5 to 20%, and the region of the intensity ratio (G/D) of 0.5 to 1.5 of the drawn line is 20% or more. With this configuration, for the first time, it is possible to obtain a unique unfired pencil core that can highly achieve both drawn line performance that is high in visibility and easy to take in even with a tablet, and drawn line performance such as high pencil writing property and high drawn line erasing rate.

The Raman spectrum obtained by Raman spectroscopy is mainly used for structural analysis of a carbon material. The D band (at around 1350 cm$^{-1}$) is a peak derived from a diamond structure (sp3 bond), and the G band (at around 1580 cm$^{-1}$) is a peak derived from a graphite structure (sp2 bond).

In the present embodiment, it is desirable that the region of the intensity ratio (G/D) of 2.0 or more in the Raman spectrum of the drawn line is 5 to 20%, preferably 10 to 15% out of 100%, and the region of the intensity ratio (G/D) of 0.5 to 1.5 of the drawn line is 20% or more, preferably 30 to 50%.

The unfired pencil core having such drawn line characteristics can be prepared by suitably combining each suitable component from the above-described extender species, pigment species, and water-soluble resin species, and the contents thereof, and further combining a suitable mixing method, manufacturing method, and the like. Preferably, scale-like graphite having an average particle diameter of 5 to 20 $\mu$m is desirably used as the material for having the intensity ratio (G/D) of 2.0 or more. At least one of a carbon black, an earthy graphite, and a plant-derived black pigment such as bamboo charcoal that is amorphous carbon is desirably used as the material for having the intensity ratio (G/D) of 0.5 to 1.5.

The average particle diameter referred to herein refers to a volume-based median diameter (D50) measured by a particle size distribution meter [Microtrac HRA9320-X100 (available from Nikkiso Co., Ltd.)], for example.

By setting the region of the intensity ratio (G/D) of 2.0 or more in the Raman spectrum of the drawn line to be as low as 5 to 20% in 100%, a degree of crystallinity is small, and black color with low brightness and low gloss is exhibited by diffuse reflection of light owing to the amorphous structure. By setting the region of the intensity ratio (G/D) of 0.5 to 1.5 of the drawn line to be 20% or more in 100%, the gloss of the drawn line can be suppressed. In the present embodiment, as the core body is formed using the above-described carbon black, bamboo charcoal, or the like used for a pigment as amorphous carbon, and then the core body is impregnated with oil as a core body having a pore by crosslinking and the like, a pencil core in which the amorphous carbon remains as it is, visibility is high, writing property is light, and strength of the core body and erasability of the drawn line are high is obtained.

The resulting unfired pencil core provides a highly visible drawn line having a drawn line lightness L* of 40 or less and a 60° gloss value of 25 or less, also provides reduced halation in taking in the tablet. The unfired pencil core provides excellent characteristics that an erasure rate of the drawn line is 85% or more, and a dynamic friction coefficient is 0.230 or less.

In the present disclosure configured as described above, at least the extender, the pigment, and the water-soluble resin are contained, the Raman spectrum of the drawn line has the region of the peak intensity ratio (G/D) of the D band (at around 1350 cm$^{-1}$) and the G band (at around 1580 cm$^{-1}$) of 2.0 or more in 5 to 20%, and the region of the intensity ratio (G/D) of 0.5 to 1.5 of the written line in 20% or more. With this configuration, it is possible to obtain an unfired pencil core that can highly achieve both the drawn line performance of high visibility and easy take in even with a tablet, and drawn line characteristics such as high pencil writing property and high drawn line erasing rate. Examples

Next, the present disclosure will be described in more detail using Examples and Comparative Examples, but the present disclosure is not limited to the following Examples.

(Examples 1 to 4 and Comparative Examples 2 and 3: Manufacture of unfired pencil core)

The unfired pencil cores of Examples and Comparative Examples had the composition shown in Table 1 below.

After the same mass of water was added to each raw materials of the unfired pencil cores of Examples 1 to 4 and Comparative Examples 2 and 3 shown in Table 1 below, the mixture was mixed with a planetary mixer, and then kneaded with a two-roll mill while moisture was adjusted. The mixture was formed into a thin wire shape by a hydraulic plunger type extruder, and thendried at 180°C for 3 hours while moisture was removed to obtain a black pencil core porous body having a diameter of 2.5 mm in Examples 1 to 4 and Comparative Examples 2 and 3. The black pencil core porous bodies were immersed in silicone oil at 80°C to impregnate the internal pore with the silicone oil, thereby obtaining a black unfired pencil core as an unfired pencil core. Each oil impregnation rate (mass%: mass before impregnation/mass after impregnation) is shown in Table 1 below (the same applies hereinafter).

(Comparative Example 1: Manufacture of fired pencil core) The same mass of water was added to each raw materials of the fired pencil cores shown in Table 1 below, the mixture was mixed with a planetary mixer, and then kneaded with a two-roll mill while moisture was adjusted. This mixture was formed into a thin wire shape by a hydraulic plunger type extruder, and then dried at 150°C for 3 hours while moisture was removed to obtain a black pencil core body having a diameter of 2.6 mm. These black pencil core porous bodies were fired at 1000°C for 5 hours in a reducing atmosphere to obtain a black pencil core porous body having a diameter of 2.5 mm. The black pencil core porous body was immersed in silicone oil at 80°C to impregnate the internal pore with the silicone oil, thereby obtaining a black fired pencil core as a fired pencil core.

(Comparative Example 4: Manufacture of unfired color pencil core)

The same mass of water was added to each raw materials (waxes were used) of the unfired color pencil core of Comparative Example 4 shown in Table 1 below, the mixture was mixed with a planetary mixer, and then moisture was adjusted while kneading with a two-roll mill. This mixture was formed into a thin wire shape by a hydraulic plunger type extruder, and then dried at 180°C for 3 hours while moisture was removed to obtain a black pencil core porous body having a diameter of 2.5 mm. These black pencil core porous bodies were immersed in silicone oil at 80°C to impregnate the internal pore with the silicone oil, thereby obtaining an unfired color pencil core.

For the unfired pencil core, the fired pencil core, and the unfired colored pencil core obtained in each of Examples 1 to 4 and Comparative Examples 1 to 4, the region of the peak intensity ratio (G/D) of the D band (at around 1350 cm$^{-1}$) and the G band (at around 1580 cm$^{-1}$) in the Raman spectrum of the drawn line of 2.0 or more and the region of the peak intensity ratio (G/D) of the drawn line of 0.5 to 1.5 were measured by the following measurement method.

<Raman spectroscopic analysis of drawn line>

A drawn line was placed on a Raman microscope (XploRA, available from HORIBA, Ltd.), and measurement was performed using a laser wavelength of 532 nm. The measurement was set as a capturing time of 0.1 seconds, the number of integrations of 10 times, a light reducing filter of 10%, an objective lens magnification of 20 times, a confocal hole of 500, a slit width of 100 $\mu$m, and a measured wavelength of 100 to 3000 cm$^{-1}$. The drawn line for measurement was dispensed on a slide glass, and flattened using a spatula. Among the obtained peaks, the peak intensity at around 1580 cm$^{-1}$ in the spectrum was defined as the G band, the peak intensity at around 1350 cm$^{-1}$ was defined as the D band, and the intensity ratio (G/D) of the drawn line was defined. Distribution was measured by mapping with D band and G band peak ratios at two respective points in a area of 0.1 mm × 0.1 mm.

Further, in the unfired pencil core, the fired pencil core, and the unfired colored pencil core obtained in each of Examples 1 to 4 and Comparative Examples 1 to 4, the lightness L* value of the drawn line, the 60° gloss, shining evaluation in photographing, a coefficient of dynamic friction, and the drawn line erasing rate (erasability) were measured and evaluated by the following methods.

The results are shown in Table 1 below.

(Method for measuring lightness L*)

The lightness (bright and dark) was evaluated on a surface of the drawn line of a member of an ink reservoir in a barrel using a color meter SC-P (available from Suga Test Instruments Co., Ltd.) under the following measurement conditions, and evaluated according to the following evaluation criteria.

[Optical conditions] Reflection measurement; diffused light illumination 8° received

According to condition c in JIS Z 8722

Evaluation criteria:

A; 37 or less
B; more than 37 and less than 42
C; 42 or more

(Method for measuring 60° glossiness)

A specular glossiness was measured in accordance with JIS Z 8741-1997. The 60° glossiness was evaluated according to the following evaluation criteria.

A: 22 or less
B: more than 22 and less than 30
C: 30 or more

(Shining evaluation in photographing)

When a light source was placed at a height of 30 cm and a drawn line was photographed at an angle of 30°, a photograph of the drawn line was observed and evaluated according to the following evaluation criteria.
Evaluation criteria:

∘: Halation of the drawn line is small, and the drawn line is exhibited clearly in black
△: There is halation of the drawn line, and the drawn line is exhibited in slight gray
×: Halation of the drawn line is significant, and the drawn line is exhibited in gray

(Method for measuring coefficient of dynamic friction)

A value (n = 10) obtained by dividing an average value of total frictional forces in lines drawn by a drawing method using a drawing apparatus prescribed in JIS S 6005:2007 and JIS S 6006:2007 by a writing load was defined as a "coefficient of dynamic friction".

(Method for measuring drawn line erasing rate)

After an eraser (EP-105E) was reciprocated five times on the drawn line, drawn in the abrasion test, under a load of 12 N, a density after erasing was measured, and the drawn line erasing rate was determined from the following formula (n = 10).

Drawn line erasing rate (%) = (drawn line density - density after erasing)/drawn line density $\times$ 100

[Table 1]

| | | | | | | | | | (Total amount 100 mass%) |
|---|---|---|---|---|---|---|---|---|---|
| | | Example | | | | Comparative Example | | | |
| | | 1 | 2 | 3 | 4 | 1 | 2 | 3 | 4 |
| Extender (filler) | Scale-like graphite *1 | 10 | 10 | 10 | 10 | 60 | 40 | | |
| | Talc *2 | 45 | 45 | 45 | 45 | | 35 | 55 | 35 |
| | Clay *3 | | | | | 40 | | | |
| Pigment | Carbon black *4 | 30 | 20 | 20 | 20 | | 10 | 30 | 30 |
| | Earthy graphite *5 | | 10 | | | | | | |
| | Bamboo charcoal *6 | | | 10 | | | | | |
| | Blue pigment *7 | | | | 10 | | | | |
| Waxes | Beeswax *8 | | | | | | | | 10 |
| | Montan wax *9 | | | | | | | | 10 |
| | Castor wax *10 | | | | | | | | 10 |
| Water-soluble resin | CMC-Na *11 | 1 | 1 | 1 | 1 | | 1 | 1 | 5 |
| | Polyvinyl alcohol *12 | 5 | 5 | 5 | 5 | | 5 | 5 | |
| | Xanthan gum *13 | 4 | 4 | 4 | 4 | | 4 | 4 | |
| | Polyacrylic acid *14 | 5 | 5 | 5 | 5 | | 5 | 5 | |
| Oil impregnation rate | Silicone oil *15 | 20% | 18% | 22% | 15% | 14% | 15% | 15% | 10% |
| Drawn line Raman spectrum | G/D 2.0 or more | 13% | 15% | 16% | 14% | 60% | 57% | 0% | 0% |
| | G/D 0.5 to 1.5 | 40% | 27% | 40% | 27% | 5% | 14% | 35% | 40% |
| Drawn line evaluation | Lightness L* | A: 34.7 | A: 35.7 | A: 36.1 | A: 35.5 | C: 44.1 | C: 47.1 | A: 31.5 | A: 32.1 |
| | 60° glossiness | A: 19.3 | A: 21.9 | A: 20.9 | B: 23.4 | C: 34.7 | C: 30.1 | A: 15.0 | A: 17.0 |
| Photographing evaluation | | ○ | ○ | ○ | ○ | × shiny | × shiny | ○ | ○ |
| Coefficient of dynamic friction | 0.230 or less | 0.210 | 0.221 | 0.221 | 0.217 | 0.200 | 0.198 | 0.245 | 0.262 |

(continued)

| | | Example | | | | Comparative Example | | | |
|---|---|---|---|---|---|---|---|---|---|
| | | | | | | | | (Total amount 100 mass%) | |
| | | 1 | 2 | 3 | 4 | 1 | 2 | 3 | 4 |
| Drawn line erasing rate | Drawn line erasing rate 85% or more | 90% | 88% | 87% | 89% | 90% | 89% | 80% | 50% |

*1 to *15 in Table 1 are as follows.
*1: Average particle diameter 10 $\mu$m, available from Nippon Graphite Industries, Co., Ltd.
*2: Average particle diameter 10 $\mu$m, available from Takehara Chemical
*3: Average particle diameter 2 $\mu$m, available from KCM Corporation
*4: Average particle diameter 10 nm, available from Mitsubishi Chemical Corporation
*5: Average particle diameter 2 $\mu$m, available from Nippon Graphite Industries, Co., Ltd.
*6: Average particle diameter 5 $\mu$m, available from Ezaki Glico Co., Ltd.
*7: pigment blue 15, available from Dainichiseika Color & Chemicals Mfg. Co., Ltd.
[0043] *8: available from Miki Chemical Industry Co., Ltd.
*9: available from ANDOH PARACHEMIE CO., LTD.
*10: available from ANDOH PARACHEMIE CO., LTD.
*11: available from NIPPON PAPER INDUSTRIES CO., LTD.
*12: available from Kuraray Co., Ltd.
*13: available from Sansho Co., Ltd.
*14: available from NIPPON SHOKUBAI CO., LTD.
*15: Viscosity 100CS, available from Shin-Etsu Chemical Co., Ltd.

As was apparent from the results of Table 1 above, it was confirmed that Examples 1 to 4 within the scope of the present disclosure could obtain an unfired pencil core that could highly achieve both drawing line performance that was high visibility and easy take in even with a tablet, and pencil writing property/drawing line characteristics, as compared with Comparative Examples 1 to 4 outside the scope of the present disclosure.

Industrial Applicability

The present disclosure can be used as an unfired pencil core.

**Claims**

1. An unfired pencil core comprising at least an extender, a pigment, and a water-soluble resin,
   wherein in an intensity ratio (G/D) of D-band (at around 1350 cm$^{-1}$) and G-band (at around 1580 cm$^{-1}$) in a Raman spectrum of drawn lines obtained, a region of an intensity ratio (G/D) of 2.0 or higher is 5-20%, and a region of an intensity ratio (G/D) of the drawn lines of 0.5-1.5 is 20% or more.

2. The unfired pencil core according to claim 1, wherein a material for having the intensity ratio (G/D) of 2.0 or more is scale-like graphite having an average particle diameter of 5 to 20 $\mu$m.

3. The unfired pencil core according to claim 1 or 2, wherein a material for having the intensity ratio (G/D) of 0.5 to 1.5 is at least one selected from carbon black, earthy graphite, and a plant-derived black pigment.

FIG.1

## INTERNATIONAL SEARCH REPORT

| | International application No. |
|---|---|
| | **PCT/JP2024/028969** |

| **A.** | **CLASSIFICATION OF SUBJECT MATTER** |
|---|---|

*C09D 13/00*(2006.01)i; *B43K 19/02*(2006.01)i
FI: C09D13/00; B43K19/02 J

According to International Patent Classification (IPC) or to both national classification and IPC

| **B.** | **FIELDS SEARCHED** |
|---|---|

Minimum documentation searched (classification system followed by classification symbols)

C09D13/00; B43K19/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | JP 2023-25567 A (MITSUBISHI PENCIL CO., LTD.) 22 February 2023 (2023-02-22)<br>entire text | 1-3 |
| A | JP 2020-2191 A (MITSUBISHI PENCIL CO., LTD.) 09 January 2020 (2020-01-09)<br>entire text | 1-3 |
| A | JP 2016-102172 A (PENTEL CORP.) 02 June 2016 (2016-06-02)<br>entire text | 1-3 |
| A | JP 2006-265299 A (PILOT PRECISION CO., LTD.) 05 October 2006 (2006-10-05)<br>entire text | 1-3 |
| A | JP 6-157974 A (MITSUBISHI PENCIL CO., LTD.) 07 June 1994 (1994-06-07)<br>entire text | 1-3 |
| A | JP 2004-262984 A (PENTEL CORP.) 24 September 2004 (2004-09-24)<br>entire text | 1-3 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/028969** |

### C. DOCUMENTS CONSIDERED TO BE RELEVANT

| Category* | Citation of document, with indication, where appropriate, of the relevant passages | Relevant to claim No. |
| --- | --- | --- |
| A | JP 8-27407 A (MITSUBISHI PENCIL CO., LTD.) 30 January 1996 (1996-01-30)<br>entire text | 1-3 |

Form PCT/ISA/210 (second sheet) (July 2022)

**INTERNATIONAL SEARCH REPORT**
Information on patent family members

International application No.

**PCT/JP2024/028969**

| Patent document cited in search report | | | Publication date (day/month/year) | Patent family member(s) | | | Publication date (day/month/year) |
|---|---|---|---|---|---|---|---|
| JP | 2023-25567 | A | 22 February 2023 | WO 2023/017643 A1 entire text | | | |
| JP | 2020-2191 | A | 09 January 2020 | US 2021/0371690 A1 entire text WO 2020/004390 A1 entire text EP 3812431 A1 entire text CN 112313295 A entire text | | | |
| JP | 2016-102172 | A | 02 June 2016 | (Family: none) | | | |
| JP | 2006-265299 | A | 05 October 2006 | (Family: none) | | | |
| JP | 6-157974 | A | 07 June 1994 | US 5430075 A entire text US 5534206 A entire text DE 4332582 A1 entire text | | | |
| JP | 2004-262984 | A | 24 September 2004 | (Family: none) | | | |
| JP | 8-27407 | A | 30 January 1996 | (Family: none) | | | |

Form PCT/ISA/210 (patent family annex) (July 2022)

**REFERENCES CITED IN THE DESCRIPTION**

**Patent documents cited in the description**

- JP 2007138031 A
- JP 2012052109 A
- CN 109385147 B
- JP 2023095065 A